Europäisches Patentamt

European Patent Office

Office européen des brevets

(19)

(11) Publication number: **0 159 888 B1**

## EUROPEAN PATENT SPECIFICATION

(12)

(45) Date of publication of patent specification: **13.03.91**

(51) Int. Cl.⁵: **B60C 7/12**

(21) Application number: **85302610.2**

(22) Date of filing: **15.04.85**

Divisional application 88111389 filed on 15.07.88.

(54) **Non-pneumatic tire.**

(30) Priority: **16.04.84 US 600932**

(43) Date of publication of application:
**30.10.85 Bulletin 85/44**

(45) Publication of the grant of the patent:
**13.03.91 Bulletin 91/11**

(84) Designated Contracting States:
**BE DE FR GB IT NL SE**

(56) References cited:
**EP-A- 0 081 220          DE-A- 2 460 051**
**DE-A- 3 230 812          FR-A- 2 498 529**
**US-A- 3 888 545          US-A- 3 907 370**
**US-A- 4 226 273**

(73) Proprietor: **The Uniroyal Goodrich Tire Company**
**600 South Main Street**
**Akron, Ohio 44397-0001(US)**

(72) Inventor: **Page, Giles J.**
**125 Potuccos Ring Road**
**Wolcott New Haven Connecticut 06716(US)**
Inventor: **Palinkas, Richard**
**Campville Road, RFD No. 1**
**Northfield Litchfield Connecticut 06778(US)**

(74) Representative: **Geldard, David Guthrie et al**
**URQUHART-DYKES AND LORD 5th Floor,**
**Tower House Merrion Way**
**Leeds, LS2 8PB West Yorkshire(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

This invention relates to a non-pneumatic tire, and to a tire and wheel rim assembly.

Various tire constructions have been devised for use on vehicle wheels over the years with most vehicles having pneumatic tires to provide the desired cushioning. The difficulty with pneumatic tires is that they are subject to punctures and cannot be operated in the deflated condition for an appreciable distance. Cushioning devices have been placed inside pneumatic tires to support the tires in the deflated condition, thereby providing a "run-flat" capability. However, the heat generated during such run-flat operation limits the distance that such a tire can go in the deflated condition.

Non-pneumatic tires have also heretofore been used on vehicle wheels over the years, for example as automotive spare tires, industrial tires, off-the-road tires, bicycle tires, wheel barrow tires, and the like. They have not been completely satisfactory in these applications because they have not heretofore had suitable cushioning and handling characteristics. Similarly, in the past it has been difficult to provide for a variable spring rate in such tires without changing the type of materials used therein. Also, where the non-pneumatic tires have been solid tires, heat build up and subsequent degradation of the elastomeric materials comprising the tires have severely limited the uses to which such tires could be put.

One example of a non-pneumatic tire comprising an annular body of resilient elastomeric material is shown in DE-A-2460051, and is taken as the starting point for claim 1 herein. The elastomeric material of that tire has a Shore A hardness of 55 to 90.

Although various materials and various types of supporting and cushioning wall structures have been employed in non-pneumatic tires, such materials and structures have not been capable of allowing the tire both to deform locally and to achieve its load bearing capability in a manner approximating the manner in which a pneumatic tire achieves the same. The invention seeks to provide an improved non-pneumatic tire.

According to the present invention a non-pneumatic tire as aforesaid is characterised as set forth in claim 1.

The combination of the particular structure and particular materials set forth in claim 1 provides a tire that can deform locally and achieve its load-bearing capability in a manner approximating that of a pneumatic tire.

Preferably the relationship between the outer radius of the outer member and the radial distance from the radially outer surface of the inner member to the radially inner surface of the outer member is governed by the formula $r_o/10 \leqslant D \leqslant r_o/2$.

This factor contributes to the qualities of preferred tires according to the invention.

Examples of materials useful for making the non-pneumatic tire of this invention comprise the following:: polyurethane, natural rubber, polybutadiene, polyisoprenes, ethylenepropylene-non-conjugated diene terpolymer, copolymers of butadiene with acrylonitrile and with methacrylonitrile, styrenes and acrylates. The most preferred elastomer for use in this invention is polyurethane. The invention will be better understood from the following description of specific embodiments of tires in accordance therewith, given by way of example only in conjunction with the accompanying drawings, in which:-

Figure 1 is a side elevation view of a non-pneumatic tire and rim assembly embodying the invention;

Figure 2 is an enlarged fragmentary view of a portion of the tire and rim assembly shown in Figure 1, showing the intermediate load-carrying and cushioning structure thereof in greater detail;

Figure 3 is a sectional elevation view, taken along the line 3-3 of Figure 2;

Figure 4 is a sectional elevation view taken along the line 4-4 of Figure 1, but showing the tire and rim assembly at a stage of manufacture before a tread has been added thereto and while the tire and rim assembly is still in the mold in which it is formed;

Figure 5 is a sectional elevation view, taken along the lines 5-5 of Figure 4, showing the manner in which inserts are mounted in the mold to form the rib members;

Figure 6 is a view similar to Figure 2, illustrating a second embodiment of tire and rim structure;

Figure 7 is a sectional elevation view, taken along the line 7-7 of Figure 6;

Figure 8 is a view similar to Figure 2 showing a third embodiment of tire and rim assembly;

Figure 9 is a sectional elevation view, taken along the line 9-9 of Figure 8;

Figure 10 is a view similar to Figure 2 of a fourth embodiment of tire and rim assembly;

Figure 11 is a sectional elevation view, taken along the line 11-11 of Figure 10;

Figure 12 is a sectional elevation view similar to the view shown in Figure 3, illustrating a fifth embodiment of tire and rim assembly;

Figure 13 is a sectional elevation view similar to the view shown in Figure 3, illustrating a sixth embodiment of tire and rim assembly;

Figure 14 is a sectional elevation view of a tire and rim assembly similar to the view shown in Figure 7 but illustrating an alternate method of securing the tire to the rim assembly;

Figure 15 is a sectional elevation view similar to the view shown in Figure 14 illustrating yet another arrangement for securing the tire to the rim assembly;

Figure 16 is a fragmentary elevational view, taken along the line 16-16 of Figure 15, showing a tongue and groove interlocking arrangement for non-rotatively mounting the tire on the rim;

Figures 17 and 18 are sectional elevation views similar to the view shown in Figure 11 but illustrating further embodiments of the invention;

Figure 19 is a sectional elevation view similar to the view shown in Figure 7 but illustrating an alternative embodiment of this invention;

Figure 20 is a view similar to Figure 6, illustrating another alternative embodiment of this invention;

Figure 21 is a sectional elevation view, taken along the line 21-21 of Figure 20; and

Figure 22 is a sectional elevation view similar to Figure 21 but illustrating yet another embodiment of this invention.

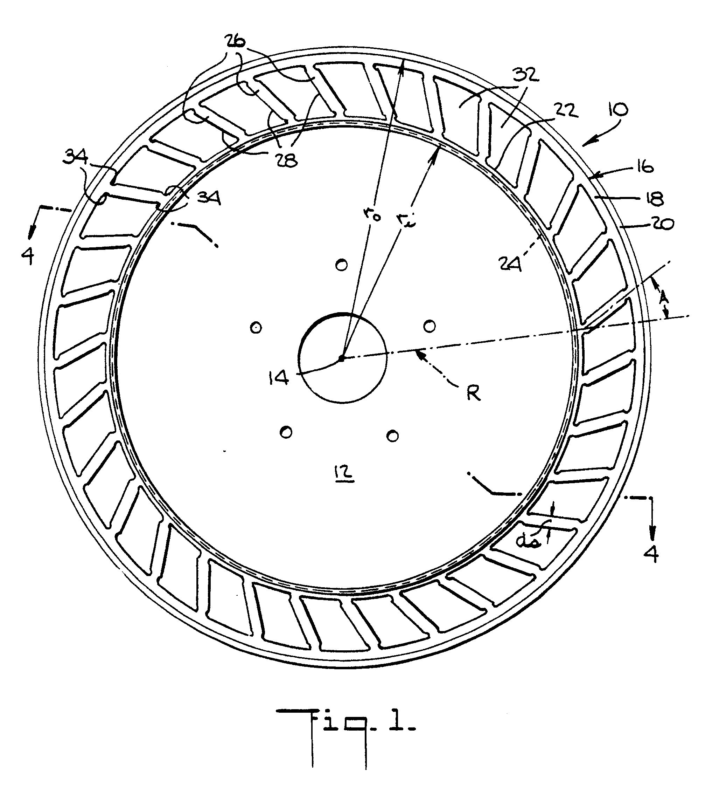

Referring to Figures 1, 2 and 3 wherein a preferred embodiment of this invention is illustrated, a tire 10 is shown mounted on a wheel 12 for rotation about an axis 14. The tire 10 comprises an annular body 16 of resilient elastomeric material having an outer cylindrical member 18 at the outer periphery thereof on which a tread 20 may be mounted. The annular body 16 is also provided with an inner cylindrical member 22 at its inner periphery which is adhered to or otherwise fastened to an outer cylindrical surface 24 of wheel rim member 12. Inner cylindrical member 22 is of the same length as, coaxial to, and coextensive with outer cylindrical member 18.

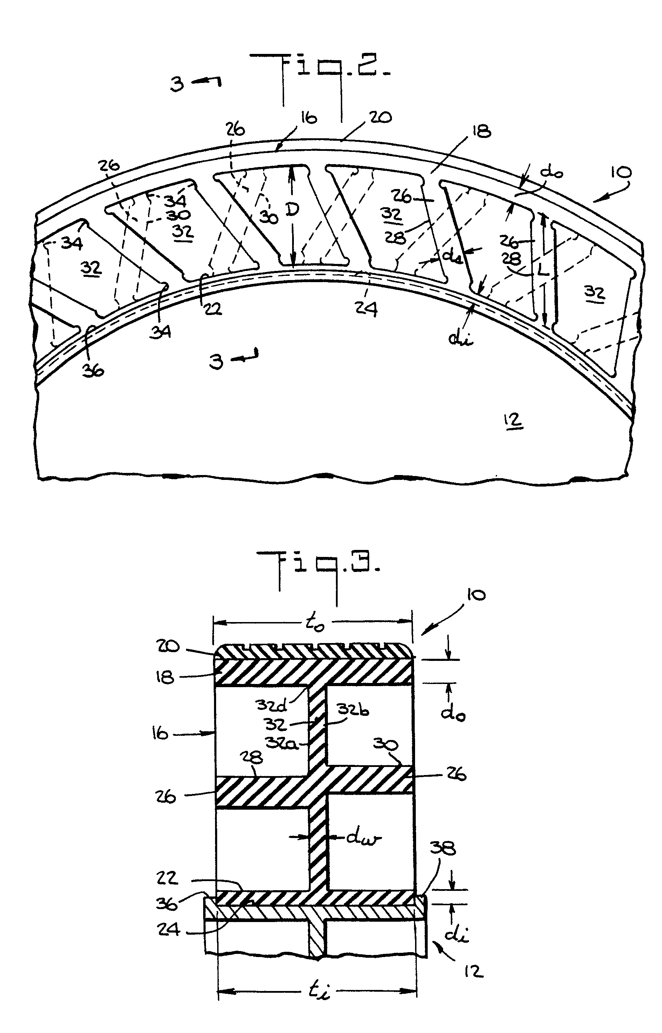

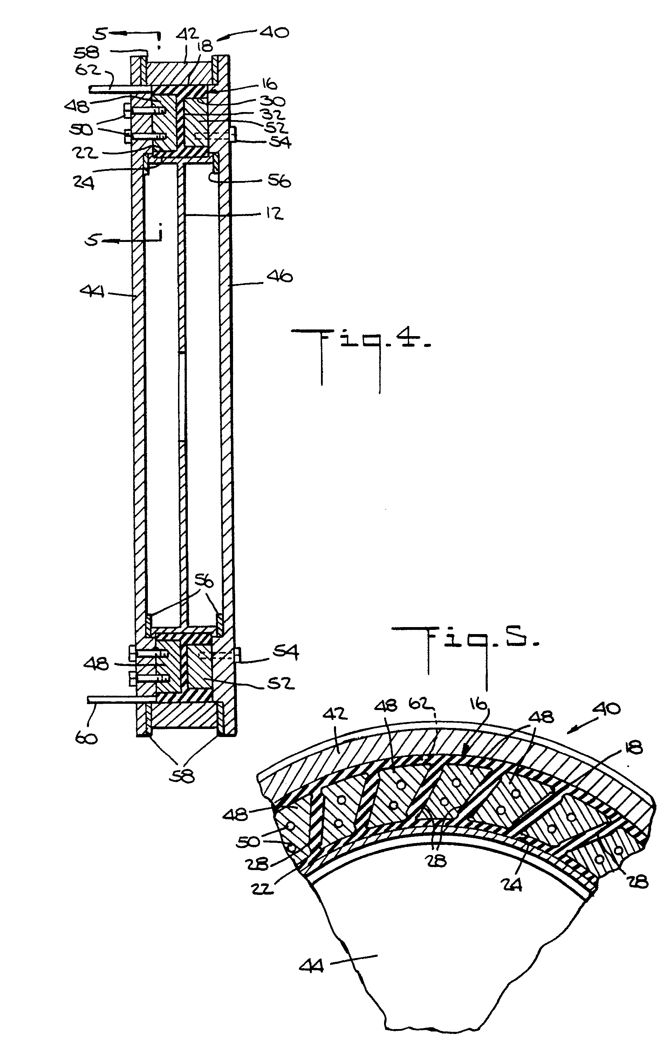

The outer cylinder member 18 is supported and cushioned by a plurality of circumferentially spaced-apart rib members 26, each of which includes a first axial portion 28 (Figure 3) and a second axial portion 30, and by a web member 32, which in this embodiment of the invention is planar and is connected on one of its side faces 32a to the first portion 28 of rib members 26 and is connected on its other side face 32b to the second portion 30 of rib members 26.

The planar web member 32 is positioned midway between the axial ends of the inner and outer cylindrical members 18 and 22. It is connected at its inner periphery 32c to the inner cylindrical member 22 and is connected at its outer periphery 32d to the outer cylindrical member 18. Similarly, the various rib members 26 (Figure 2) are connected at their radially inner ends to the inner cylindrical member 22 and at their radially outer ends to the outer cylindrical member 18. The ribs 26 are preferably undercut where their ends connect to the inner and outer cylindrical members, as shown at 34, to enhance flexibility of the connection.

The rib members 26 extend generally axially along the inner and outer cylindrical members 22 and 18 (Figure 3) and are inclined at an angle A (Figure 1) of 15° to 75° to radial planes R which intersect them at their junctions with the inner cylindrical member 22. The web member 32 (Figure 3) in this embodiment lies in a plane that is perpendicular to the rotational axis 14 of the tire 10.

In the preferred embodiment shown in Figure 1 to 3, the first axial rib member portions 28 and the second axial rib member portions 30 are each inclined at the same angle to the radial planes R which intersect them at their radially inner ends but the angles of the first portions 28 are preferably oppositely directed with respect to the radial planes R from the angles of the second portions 30. Thus, as viewed in Figure 3, the first rib portion 28 proceeds upwardly from the section lines to connect with the outer cylindrical member 18, while the second rib portion 30 proceeds downwardly from the section lines to connect with the inner cylindrical member 22.

The annular body portion 16 of the tire 10 preferably is formed with dimensions, dimensional relationships and angular relationships which fall within the broad, preferred and optimal ranges set forth in the following Table:

## TABLE I

| Item | Broad Range | Preferred Range | Optimal Range |
| --- | --- | --- | --- |
| $r_o$ | 15.24-91.44cm | 25.4 - 60.96cm | 30.48-45.72cm |
| A | 15-75$^\circ$ | 20-60$^\circ$ | 20-45$^\circ$ |
| $d_i, d_o$ | 0.16-5.08cm | 0.32-2.54cm | 0.32-1.27cm |

| Item | Broad Range | Preferred Range | Optimal Range |
| --- | --- | --- | --- |
| D | $r_o/10 \leq D \leq r_o/2$ | $r_o/7 \leq D \leq r_o/3$ | $r_o/6 \leq D \leq r_o/4$ |
| $r_o/D$ | 2/1 - 10/1 | 3/1 - 5/1 | 3.5/1 - 4.5/1 |
| $D/d_w$ | 40/1 - 5/1 | 25/1 - 8/1 | 12/1 - 10/1 |
| L (Value of L depends on the values of A and D selected) | | | |
| $L/d_s$ | 1/1 - 10/1 | 2/1 - 8/1 | 4/1 - 7/1 |
| $t_i, t_o$ | 1.27-60.96 cm | 2.54-30.48 cm | 5.08-20.32 cm |
| $r_i$ | 10.16-76.2 cm | 20.32-53.34 cm | 20.32-40.64 cm |

In Table 1 above, the various items refer to the correspondingly identified dimensions or angles illustrated in Figures 1 to 3, and are further defined as follows: "$r_o$" is the outer radius of the annular body 16, "A" is the inclination angle that the rib members 26 make with the radial planes R, "$d_i$" is the radial thickness of the inner cylindrical member 22, "$d_o$" is the radial thickness of the outer cylindrical member 18, "L" is the angularly directed length of the rib members 26, "D" is the radial distance from the outer surface of the inner cylindrical member 22 to the inner surface of the outer cylindrical member 18, "$d_w$" is the axial thickness of the web member 32, "$d_s$" is the thickness of the rib member 26 measured perpendicularly to its length L, "$t_i$" is the axial length of the inner cylindrical member 22, "$t_o$" is the axial length of the outer cylindrical member 18, and "$r_i$" is the radial dimension of the inner surface of the inner cylindrical member 22.

In a tire of the type shown in Figures 1 to 3, having the parameters set forth in Table 1 above, the rib members 26 are constrained to deform primarily in compression by the influence of the web member 32, which may be cast as an integral part of the structure. The web member 32 tends to prevent the rib members 26 from deforming in bending, and the effect is to greatly increase structural stiffness. The tire 10 has advantages over prior art non-pneumatic tires in that it is much easier to mold and demold and can have a variable spring rate (by varying the inclination angle of the rib members 26) without requiring changes in the type of material from which it is made. This variation of spring rate with inclination angle of the rib members can be accomplished without greatly increasing compression strains in the rib member. Although bending strains at the roots of the rib members increase, these strains can be minimized by employing undercuts 34 of appropriate radii at the junctions of the rib members 26 with the inner and outer cylindrical members 22 and 18. Preferably, the undercuts 34 have a radius of about 0.32 cm to 1.27 cm on the acute angle junctions of the rib members 26 with the inner and outer cylindrical members 22 and 18, and they have a radius of about 0.64 cm to 2.54 cm on the obtuse angle junctions of the rib members 28 with the inner and outer cylindrical members 22 and 18.

A significant advantage of the tire of this invention over the prior art structures is that its enveloping properties are much improved over such prior art structures. The rib member structures can deform locally and achieve their load bearing capability by deforming much like a pneumatic tire. Prior art structures are generally much less locally deflectable and must distribute their deflections in order to obtain low spring rates.

The annular body 16 may be adhered to the surface 24 of wheel rim 12 by being molded directly thereto in a liquid injection molding process, with the outer cylindrical surface 24 of the rim having been prepared in accordance with known processes to adheringly receive the elastomeric material of the body 16. Preferably, the wheel rim 12 is provided with radial flanges 36 and 38 which cooperate with the mold in forming the annular body 16 on the wheel rim surface 24. Alternative methods of mounting the tire body 16 on the wheel rim 12 are discussed hereinafter.

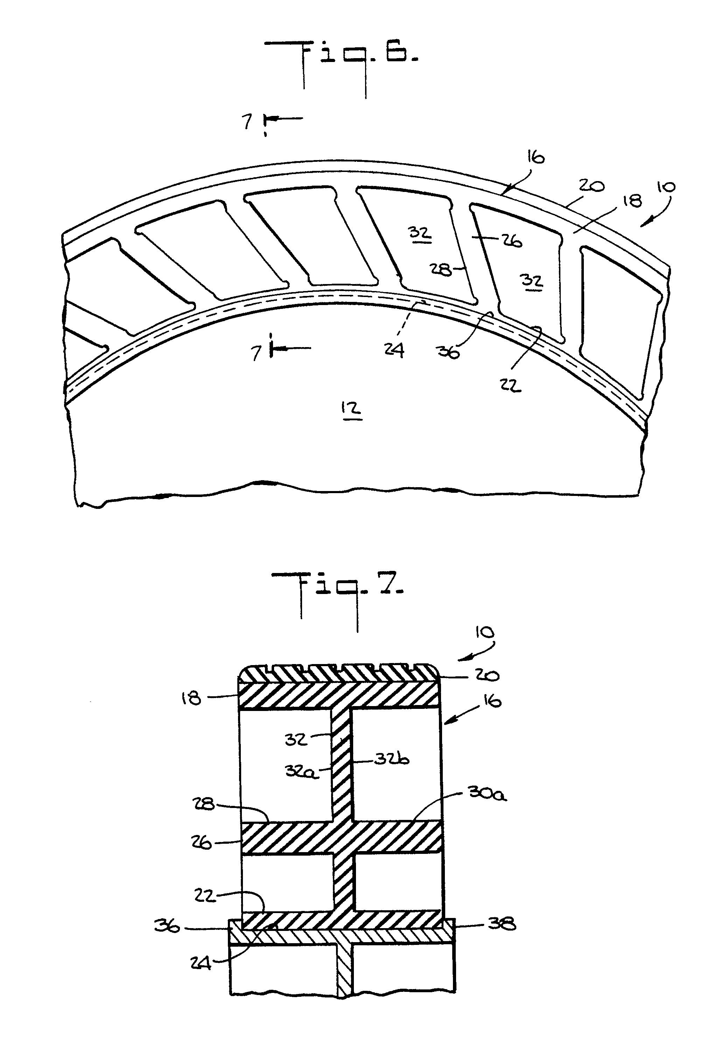

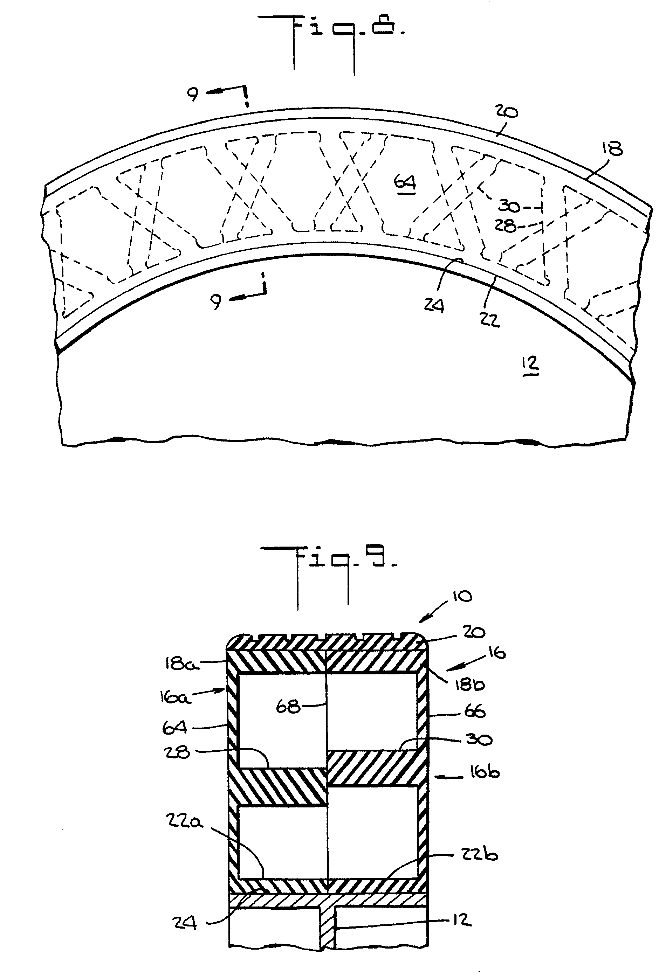

Referring now to Figures 4 and 5, a preferred method for manufacturing the tire 10, which method employs a mold shown generally at 40, will now be considered. The mold comprises an outer mold ring 42 which defines the outside diameter of the tire, and two mold plates 44, 46 which define the side edges of the annular body 16. Mold plate 44 is provided with a plurality of inserts 48 which are releasably fastened to the mold plate 44 by means of bolts 50. The inserts 48 are generally rhomboidally shaped and circumferentially spaced apart from one another so as to form the first axial portions 28 of rib members 26 between them during the molding operation.

Similarly, mold plate 46 is provided with a plurality of inserts 52 which are bolted thereto by bolts 54 with the inserts 52 being generally rhomboidally shaped and circumferentially spaced apart from one another to form the second axial portions 30 of rib members 26. The inside diameter of the annular body 16 is formed by the outer cylindrical surface 24 of the wheel rim 12.

Suitable pairs of inner, annular flat washers 56 and outer, annular flat washers 58 are employed to space the mold plates 44 and 46 from the radial flanges of the wheel rim 12, in the case of the inner washers 56, and to space the mold plates 44 and 46 from the outer mold ring 42, in the case of the outer washers 58. The axial thickness of the washers 56 and 58 determine the axial thickness of the web member 32 and these may be varied depending on design conditions specified for the annular body 16.

Similarly, the inserts 48 on mold plate 44 and the inserts 52 on mold plate 46 may be removed and replaced by corresponding inserts of different configuration when it is desired to change either the angular orientation or the thickness of the rib member portions 28 and 30, in accordance with desired design changes. An inlet spout 60 is provided for supplying liquid material to the mold from a source (not shown) during the mold filling operation, and an outlet valve 62 is provided to allow air to be removed from the mold during the filling operation.

An alternative method of making the annular body 16 would employ, in place of the wheel rim 12, an inner mold ring (not shown) similar in configuration to the outer mold ring 42 but of lesser, appropriate diameter. After the annular body 16 has been molded and post-cured in this alternate method, the annular body 16 would be glued to a machined aluminium rim using a polyurethane adhesive.

Example 1 below provides details with respect to a non-pneumatic tire that was made in accordance with the preferred embodiment.

EXAMPLE 1

The non-pneumatic tire that was prepared had the following dimensions:

$$r_o = 26.04 \text{ cm}$$
$$A = 45^\circ$$
$$d_i, d_o = 0.51 \text{ cm, each}$$
$$D = 4.570 \text{ cm}$$
$$r_o/D = 5.5$$
$$D/d_w = 8.2$$
$$L = 5.72 \text{ cm}$$
$$L/d_s = 6.4$$

$$t_i, t_o = 6.1 \text{ cm, each}$$
$$r_i = 20.45 \text{ cm}$$

The tire was made in a mold similar to that shown in Figures 4 and 5, but having an inner mold ring substituted in place of the wheel rim 12, as discussed above as an alternative method of making the annular body 16. The resulting mold was filled with a reaction mixture of (a) tolylenediisocyanate-poly-(tetramethylene ether) glycol, (M.W. 2000), prepolymer having an NCO number of 5.45 and an amine equivalent of 767 and (b) a methylenedianiline-NaCl complex curative (50% by weight in dioctyl phthalate), the (a)/(b) weight ratio being 1/0.27. Prior to mixing the foregoing components, the tolylenediisocyanate-poly(tetramethylene ether) glycol was heated to 65° and the methylenedianiline-NaCl complex curative was heated to 27°C. The mold was also preheated to 65°C prior to introducing the reaction mixture.

The reaction mixture was added to the mold under about 450 kPa pressure with care being taken to ensure that all air in the mold was displaced by the liquid reaction mixture that was being added.

Once the mold was filled, it was placed for about one hour in an oven (set for 121°C) for the purpose of curing the polyurethane. Subsequently, the mold was opened, the polyurethane annular body 16 was removed and the body was post-cured for about 16 hours at 70°C.

A simple tire tread having a thickness of about 0.6 cm was then glued onto the outer cylindrical member 18 using a methyl 2-cyanoacrylate adhesive and the resulting tire was fitted and glued onto a steel rim member 12 using a polyurethane adhesive cured with an organic isocyanate curative. The resulting tire and wheel assembly, in turn, was used to replace a conventional passenger car tire and wheel assembly. A car with the foregoing tire and wheel assembly was driven at speeds of up to 64 km/hr without deleteriously affecting control of the car and without damage to the non-pneumatic tire of this invention.

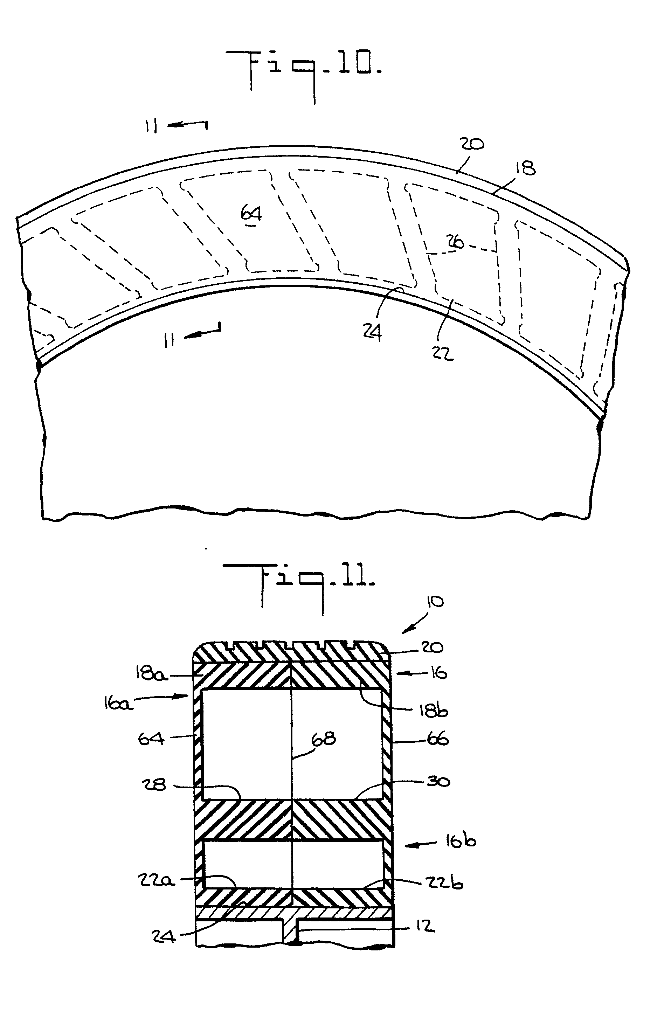

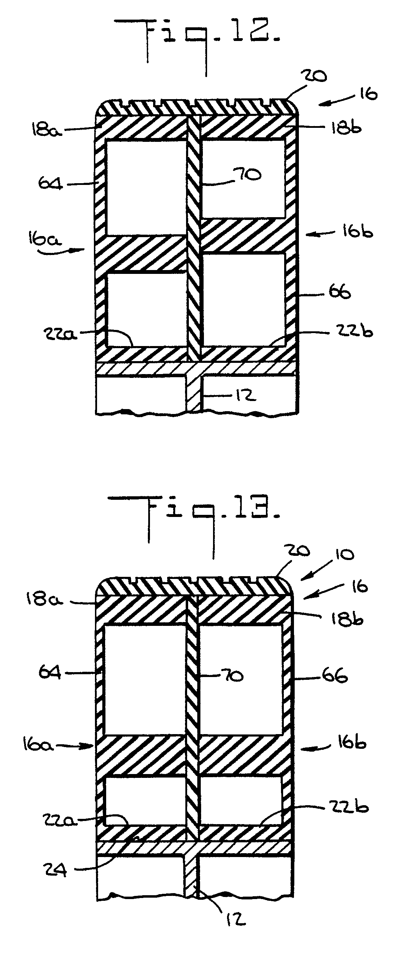

Referring now to Figures 6 and 7 an alternative embodiment of the tire 10 has been shown. In these as well as in the remaining figures of this specification, parts corresponding to the parts illustrated in Figures 2 and 3 have been identified by the same numerals.

In the embodiment of Figures 6 and 7, the construction of the annular body 16 is essentially similar to that of the foregoing embodiment except that the angular orientation of the second axial portions 30a of rib members 26 has been reversed from the angular orientation of the second axial portions 30 of the rib members 26 in Figures 2 and 3, so that the second axial portions 30a of Figures 6 and 7 are in direct axial alignment with the first axial portions 28 of the rib members 26. This arrangement provides slightly different ride and handling characteristics from those of the embodiment shown in Figures 2 and 3.

The annular body 16 of Figures 6 and 7 is manufactured in a manner similar to that of the first embodiment described herein. In this case the inserts 52 (Figure 4) would be removed and replaced by a new set of inserts having their rhomboidal shapes angularly oriented in a direction opposite to the direction in which they are oriented in Figure 4.

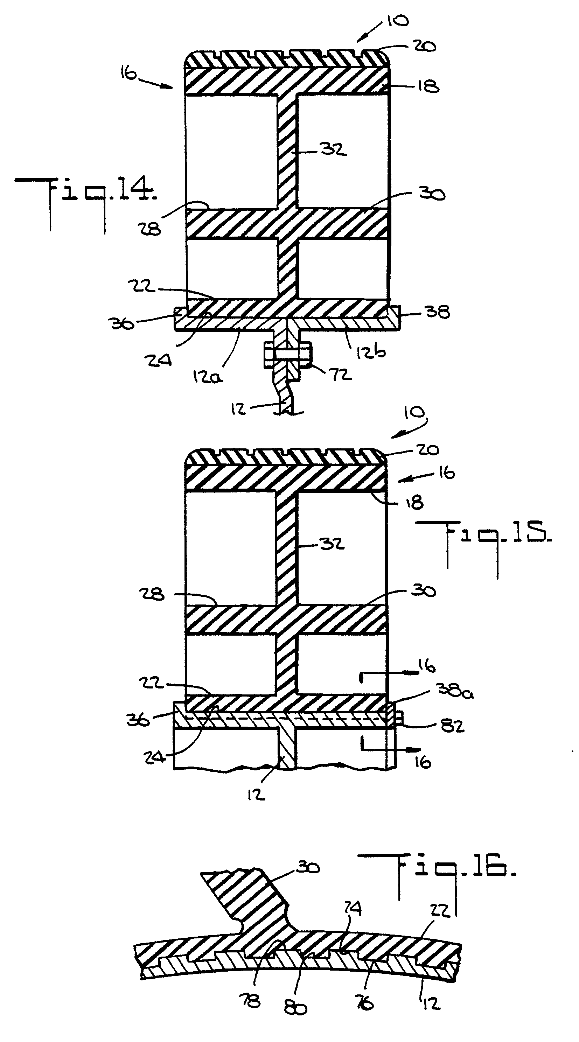

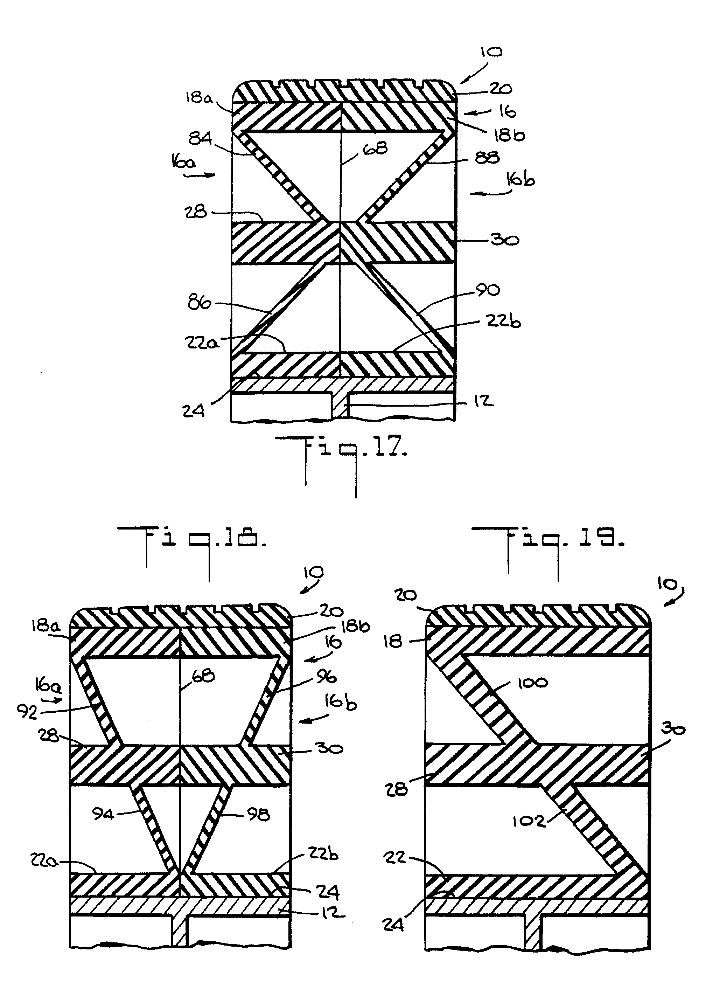

Referring now to Figures 8 and 9, yet another embodiment of this invention has been disclosed. In this embodiment the central web member 32 of the prior embodiments has been removed and replaced by a pair of thinner web members 64, 66, one of which is positioned at each of the axial ends of the annular body 16, enclosing the hollow interior thereof. In this embodiment the inner cylindrical member 22 is formed from a first axial portion 22a and a second axial portion 22b, and the outer cylindrical member 18 is formed from a first axial portion 18a and a second axial portion 18b. Similarly, the rib members are comprised of first axial portions 28 and second axial portions 30, with the angular orientations of the portions 28 and 30 being reversed from one another.

EP 0 159 888 B1

The angular body 16 of the embodiment shown in Figures 8 and 9 is comprised of two identical half bodies 16a and 16b, each of which may be independently molded and then adhesively joined to the other along a parting line 68 by applying liquid polyether polyurethane to the abutting faces of the two half bodies 16a, 16b after each has been cured, and then curing the adhesively bonded assembly. Thereafter, the composite annular body 16 would be adhesively bonded to the outer surface 24 of the wheel rim 12 in the same manner as described earlier herein.

A mold similar to one half of the mold shown in Figure 4 may be used to make each of the annular half bodies 16a, 16b, the remaining half of the mold of Figure 4 would be replaced by a flat plate. The inner and outer rings of such a mold would be about half the axial length of the outer ring 42 of Figure 4, and the thicknesses of washers 56 and 58 would be appropriately selected to achieve the desired thickness of the web members 64 and 66 in this embodiment.

The embodiment of Figures 8 and 9 would, of course, give slightly different ride and handling characteristics than the previously described embodiments, tending to be stiffer at the tread edges than at the centre of the tread 20 of the tire.

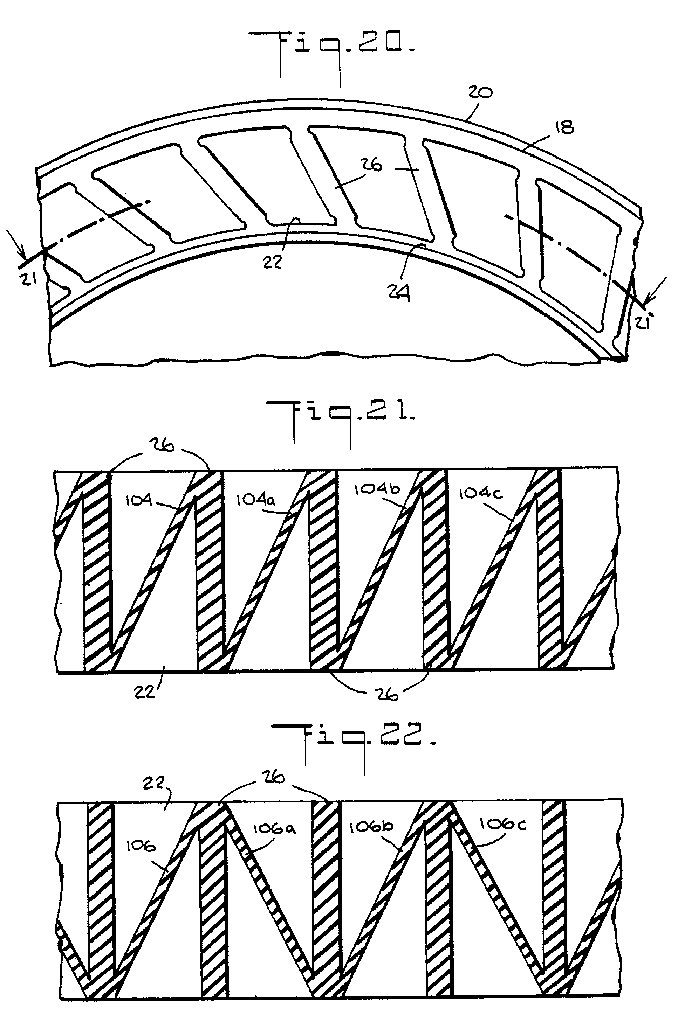

Referring now to Figures 10 and 11, yet another embodiment of this invention has been shown. This embodiment is similar to the embodiment of Figures 8 and 9, except that the second axial portions 30 of the rib members are angularly oriented in the same direction as the first axial portions 28 of the rib members.

The annular body 16 of this embodiment would be made in a mold similar to those already described but in this case two separate molds would be required, one for making each of the annular half bodies 16a and 16b so that the desired angular orientation of the rib portions 28 and 30 can be obtained.

Referring now to Figure 12, a three-web-member embodiment of this invention has been illustrated. In this embodiment annular half bodies 16a and 16b, similar to but slightly shorter in the axial dimension than those shown in the embodiment of Figures 8 and 9, are employed, together with a planar disc-shaped third web member 70. Annular half bodies 16a and 16b would be made in the same manner as described in connection with the embodiments of Figures 8 and 9, and an additional mould would be provided to make the web member 70. The three parts would then be adhesively joined together in a manner similar to that described in connection with the embodiment of Figures 8 and 9 to provide a cured annular body 16 having web members at either end thereof and in the central plane thereof. The construction of this embodiment would be employed when it is desired to have additional stiffening both at the ends of the annular body and in the central plane of the annular body.

As in the embodiment of Figures 8 and 9, the first axial rib member portions 28 and the second axial rib member portions 30 make equal but oppositely directed angles with their respective intersecting radial planes.

A still further embodiment of the invention is shown in Figure 13. In this case a three-web-member version of the annular body 16 is employed in which the rib member portions 28 and 30 make angles with their respective intersecting radial planes which are both equal and similarly directed relative to such planes. As before, the two annular half bodies 16a and 16b would be adhesively secured to the opposite side faces of the central web member 70 to provide an integral, composite body 16.

Referring now to Figure 14 an embodiment similar to the embodiment of Figures 6 and 7 has been shown in connection with the use of a split wheel rim having a first axial portion 12a and second axial portion 12b thereon. The two halves of the wheel rim are bolted together by bolts 72 and each is provided with a corresponding flange 36 and 38 to assist in retaining the annular body 16 in axial position on the wheel rim 12. The split rim arrangement of Figure 14 facilitates mounting of an annular body 16 onto the wheel rim 12 when the annular body has been separately molded from the wheel rim.

Referring now to Figures 15 and 16, yet another embodiment of this invention is shown in which extra provision is made for preventing slippage between the wheel rim and the inner cylindrical member 22 during acceleration and deceleration of the tire and wheel assembly. In this case the inner surface of the inner cylindrical member 22 is provided with axially extending, circumferentially spaced depressions 74 and raised portions 76, and the outer surface 24 of the wheel rim 12 is provided with corresponding raised portions 78 and depressions 80 which interengage with the depressions and raised portions of the inner cylindrical member to prevent relative rotation therebetween. As before, one end of the outer portion of wheel rim 12 is provided with a raised annular flange 36 thereon which abuts the inner cylindrical member 22, and the other end of the outer portion of wheel rim 12 is provided with a removable raised flange 38a which is bolted thereto by bolts 82.

To mount the tire 10 onto the wheel rim 12 the removable flange 38 is unbolted and removed from the rim. Then, the various raised portions and depressions of the inner cylindrical member 22 and the outer surface 24 of the rim are coated with an adhesive and aligned, and the tire 10 is slid onto the rim 12.

7

Thereafter, the removable flange 38a is bolted back onto the rim 12 and the adhesive bonding is allowed to cure before usage. The curing may be facilitated by placing the assembly in a suitable oven at an appropriate temperature for an appropriate length of time, depending upon the adhesive used.

Referring now to Figure 17, an embodiment of this invention similar to that of Figure 11 but employing a pair of intersecting conical web members has been shown. In this case one conical web member comprises web member portions 86 and 88, and the other conical web member comprises the web member portions 84 and 90. Conical web members 84, 90 and 86, 88 each are in the form of a frustrum of a right circular cone having as its principal axis the rotational axis of the tire. The annular body 16 in this case is molded as two half bodies 16a and 16b which are then adhered together along their parting line 68 in a manner similar to that described in connection with the embodiment of Figure 9.

Figure 18 shows an embodiment of this invention similar to that shown in Figure 17 but having two conical web members 92, 94 and 96, 98 which, rather than intersecting one another, have their radially inner ends terminating on the inner cylindrical member portions 22a and 22b respectively, at points adjacent to each other and to the parting line 68 of the annular half bodies 16a, 16b comprising the annular body 16. In this case, the web members 92, 94 and 96, 98 are substantially in abutting relationship with one another.

The embodiment of Figure 19 is a variation of the embodiment shown in Figure 7, substituting a conical web member 100, 102 for the planar web member 32 of Figure 7. This embodiment would be used when it is desired to impart assymetric tire proportions to the non-penumatic tire of this invention.

Referring now to Figures 20 and 21 an embodiment of this invention has been illustrated wherein a multiplicity of web members 104, 104a, 104b, 104c etc., are employed in place of the web members described earlier. In this case each of the web members is in the form of a partial helix which extends from a corresponding end and side surface of one rib member 26 to a corresponding opposite end and side surface of an adjacent rib member 26. The so-formed helices interdigitate with one another but their projections do not intersect one another.

Figure 22 shows a variation of the embodiment of Figures 20 and 21 in which web members 106, 106a, 106b, 106c, etc. form pairs of web members (e.g. pair 106 and 106a, pair 106a and 106b, pair 106b and 106c) wherein each web member of the pair extends from an opposite side of a common end of one rib member to the opposite end of a different next adjacent rib member 26. In this case, the web members form partial helices the projections of which intersect one another.

## Claims

1. A tire comprising an annular body of resilient elastomeric material, the body having a generally cylindrical outer member (18) at the outer periphery thereof, a generally cylindrical inner member (22) spaced radially inward from and coaxial with said outer member, a plurality of axially extending, circumferentially spaced-apart rib members (26) connected at their corresponding radially inner and outer ends to said inner and outer cylindrical members, and at least one web member (32) having opposite side faces, said web member having its radially inner and outer peripheries connected respectively to said inner and outer cylindrical members and being connected on at least one of its side faces to at least one of said rib members to thereby form with said rib member a load-carrying and cushioning structure for said outer cylindrical member, characterised in that said rib members (26) are generally inclined at an angle of about 15° to 75° to radial planes which intersect them at their radially inner ends, in that the rib members are formed with undercuts (34) at the junction of the rib members (26) with the outer and inner cylindrical members (18 and 22), and in that said elastomeric material has a Shore hardness value of from 80A to 50D, and a compression modulus at 0.5 shape factor and 10% compression of from $6.9 \times 10^3$ to $344 \times 10^3$ kPa, preferably from $20.7 \times 10^3$ to $62.1 \times 10^3$ kPa.

2. A tire as claimed in claim 1 wherein at any one of said junctions where the angle between the rib member and the respective cylindrical member is an acute angle the undercut is an arc of a circle having a radius of from 0.32 to 1.27 cm.

3. A tire as claimed in claim 1 wherein at any one of said junctions where the angle between the rib member and the respective cylindrical member is an obtuse angle the undercut is an arc of a circle having a radius of from 0.64 to 2.54 cm.

4. A tire as claimed in any one of the preceding claims in which the relationship between the outer radius of the outer member (18) and the radial distance (D) from the radially outer surface of the inner member (22) to the radially inner surface of the outer member (18) is governed by the formula $r_o/10 \leqslant D \leqslant r_o/2$.

5. A tire as claimed in any one of the preceding claims wherein said web member (32) is planar, is perpendicular to the rotational axis of the tire and is positioned about half way intermediate the axial ends of said cylindrical members (18, 22), and wherein each of said rib members (26) extends axially of said web member and has a portion lying to each side of and connected to the respective side face of said web member.

6. A tire as claimed in claim 5 wherein the rib member portions (28) on one side of said web member each make the same angle to their respective intersecting radial planes as the rib member portions (30) on the other side of said web member each make to their respective intersecting radial planes.

7. A tire as claimed in claim 5 wherein the rib member portions (28) on one side of said web member each make an angle to their respective intersecting radial planes that is equal to but oppositely directed from the angle that the rib member portions (30) on the other side of said web member each make with their respective intersecting radial planes.

8. A tire as claimed in any one of claims 1 to 4 comprising first and second web members (64, 66) each being planar, being positioned perpendicular to the rotational axis of the tire, and having its inner and outer peripheries connected respectively to said inner and outer cylindrical members (22a, 18a), said first web member being positioned at one axial end of said inner and outer cylindrical members and being connected on one of its side faces to said rib members (28, 30) and said second web member being positioned at the other axial end of said inner and outer cylindrical members and being connected on one of its side faces to said rib members (28, 30).

9. A tire as claimed in claim 8 and further including a third planar web member (70) positioned perpendicular to the rotational axis of the tire and having opposite side faces, said third web member having its inner and outer peripheries connected respectively to said inner and outer cylindrical members (22b, 18b), said third web member being positioned about half way intermediate the axial ends of said cylindrical members, said rib members (28, 30) extending axially of and to each side of said third web member, a first set of rib member portions connecting said first web member (64) to one side of said third web member (70) and a second set of rib member portions connecting said second web member (66) to the other side of said third web member (70).

10. A tire as claimed in claim 8 or claim 9 wherein said rib member portions of said first and second sets (28, 30) are each of substantially equal axial length, each corresponding to about one-half of the axial length of the inner and outer cylindrical members, and wherein each rib member portion of each set makes an angle with its respective intersecting radial plane, all such angles being equal and being similarly directed.

11. A tire as claimed in claim 8 or claim 9 wherein said rib member portions of said first and second sets (28,30) are each of substantially equal axial length, each corresponding to about one-half of the axial length of the inner and outer cylindrical members, and wherein each rib member portion of each set makes an angle with its respective intersecting radial plane, all such angles being equal but the angles of rib member portions in the first set being oppositely directed to the angles of rib member portions in the second set.

12. A tire as claimed in any one of claims 1 to 4 wherein said web member (84, 90 or 92, 94 or 100, 102) is in the form of a frustrum of a right circular cone having as its principal axis the rotational axis of the tire, wherein said rib members (28, 30) extend axially of and to each side of said web member, and wherein said web member is connected on each of its side faces to respective portions of each of said rib members.

13. A tire as claimed in claim 12 and further including a second web member (86, 88 or 96, 98) in the form of a right circular cone having as its principal axis the rotational axis of the tire, said second web member having its inner and outer peripheries connected respectively to said inner and outer cylindrical members (22, 18) and being connected on each of its side faces to respective portions of each of said rib members (28, 30), the apices of said cones being oppositely directed.

14. A tire as claimed in claim 13 wherein said web members (84, 90 and 86, 88) intersect one another (figure 17).

15. A tire as claimed in claim 13 wherein said web members (92, 94 and 96, 98) are substantially in abutting relationship with one another (figure 18).

16. A tire as claimed in any one of claims 1 to 4 wherein said web member (104) forms a partial helix about the rotational axis of the tire, and further including a plurality of additional web members (104a etc. ) each of which forms a partial helix about the rotational axis of the tire, said rib members (26) extending axially of and to each side of said web members, each of said web members being connected on each of their side faces to a respective portion of at least one of said rib members, and each of said plurality of web members having its inner and outer peripheries connected respectively to said inner and outer cylindrical members (22, 18).

17. A tire as claimed in claim 16 wherein the projections of the helices of adjacent web member are non-intersecting (figure 21).

18. A tire as claimed in claim 16 wherein the projections of the helices of adjacent web members intersect one another (figure 22).

19. A tire as claimed in any one of claims 16 to 18 wherein each said rib member or portion thereof is inclined at an angle of from 20° to 45° to its respective intersecting radial planes.

20. A tire as claimed in any one of the preceding claims wherein said elastomeric material comprises a material selected from the group of materials comprising polyurethanes; natural rubber; polybutadienes; polyisoprenes; ethylene-propylene-non-conjugated diene terpolymers; copolymers of butadiene with acrylonitriles and with methacrylonitriles; styrenes and acrylates; and is preferably a polyurethane.

## Revendications

1. Bandage comprenant un corps annulaire en matériau élastique élastomère, le corps ayant un organe externe généralement cylindrique (18) à la périphérie externe de celui-ci, un organe interne généralement cylindrique (22) disposé radialement vers l'intérieur et coaxialement audit organe externe, une pluralité d'organes formant nervures (26) qui s'étendent axialement et qui sont disposés à distance sur la circonférence, connectés par leurs extrémités correspondantes radialement interne et externe auxdits organes cylindriques interne et externe, et au moins un organe formant nervure (32) qui possède des faces latérales opposées, ledit organe formant nervure ayant ses périphéries radialement interne et externe connectées respectivement auxdits organes cylindriques interne et externe et étant connecté sur au moins l'une de ses faces latérales à au moins l'un desdits organes formant nervures pour ainsi former avec ledit organe formant nervure une structure de support de charge et d'amortissement pour ledit organe cylindrique externe, caractérisé en ce que lesdits organes formant nervures (26) sont généralement inclinés d'un angle de l'ordre de 15° à 75° par rapport aux plans radiaux qui croisent ceux-ci au niveau de leurs extrémités internes radiales, en ce que les organes formant nervures sont pourvus de découpes à la jonction des organes formant nervure (26) avec les organes cylindriques externe et interne (18, 22), et en ce que ledit matériau élastomère possède une valeur de dureté Shore comprise entre 80A et 50D, et un module de compression avec un facteur de forme de 0,5 et 10 % de compression compris entre $6,9 \times 10^3$ et $344 \times 10^3$ kPa, et de préférence entre $20,7 \times 10^3$ à $62,1 \times 10^3$ kPa.

2. Bandage selon la revendication 1, dans lequel l'une quelconque desdites jonctions suivant laquelle l'angle entre l'organe formant nervure et l'organe cylindrique respectif est un angle aigu, la découpe étant un arc de cercle ayant un rayon compris entre 0,32 et 1,27 cm.

3. Bandage selon la revendication 1, dans lequel l'une quelconque desdites jonctions ou l'angle entre l'organe formant nervure et l'organe cylindrique respectif est un angle obtu, la découpe étant un arc de cercle ayant un rayon entre 0,64 et 2,54 cm.

4. Bandage selon l'une quelconque des revendications précédentes dans lequel la relation entre le rayon externe de l'organe externe (18) et la distance radiale (D) depuis la surface externe radiale de l'organe interne (22) jusqu'à la surface interne radiale de l'organe externe (18) est définie par la formule $r_o/10 \leqslant D \leqslant r_o/2$.

5. Bandage selon l'une quelconque des revendications précédentes, dans lequel l'organe formant nervure (32) est plat, perpendiculaire à l'axe de rotation du bandage et est disposé sensiblement à mi-chemin entre les extrémités axiales desdits organes cylindriques (18, 22) et dans lequel chacun des organes formant nervures (26) s'étend axialement depuis l'organe formant nervure et possède une portion s'étendant à chaque côté et connectée aux faces latérales dudit organe formant nervure.

6. Bandage selon la revendication 5, dans lequel des portions de l'organe formant nervure (28) sur un côté dudit organe formant nervure forment chacune le même angle, par rapport à leurs plans radiaux d'intersection respectifs, que font chacune des portions de l'organe formant nervure (30) sur l'autre côté dudit organe formant nervure, avec leurs plans radiaux d'intersection respectifs.

7. Bandage selon la revendication 5, dans lequel les portions de l'organe formant nervure (28) sur un côté dudit organe formant nervure réalisent chacune un angle par rapport à leur plan radial d'intersection respectif qui est égal mais directement opposé à l'angle que forme chacune des portions de l'organe formant nervure (30) sur l'autre côté dudit organe formant nervure par rapport à leurs plans radiaux d'intersection respectifs.

8. Bandage selon l'une quelconque des revendications 1 à 4, comprenant des premier et second organes formant nervure (64, 66) chacun étant plat, positionné perpendiculairement à l'axe de rotation du bandage et ayant ses périphéries interne et externe respectivement connectées aux organes cylindriques interne et externe (22a, 18a), ledit premier organe formant nervure étant positionné à une extrémité axiale desdits organes cylindriques interne et externe et étant connecté sur l'une de ses faces latérales auxdits organes formant nervures (28, 30), et ledit second organe formant nervure étant positionné à l'autre extrémité axiale desdits organes cylindriques interne et externe et est connecté sur l'une de ses faces latérales auxdits organes formant nervure (28, 30).

9. Bandage selon la revendication 8, et comprenant de plus un troisième organe plat formant nervure (70) positionné perpendiculairement à l'axe de rotation du bandage et ayant des faces latérales opposées, ledit troisième organe formant nervure ayant ses périphéries interne et externe connectées respectivement aux organes cylindriques interne et externe (22b, 18b), ledit troisième organe formant nervure étant positionné sensiblement à mi-chemin entre les extrémités axiales desdits organes cylindriques, lesdits organes formant nervures (28, 30) s'étendant axialement depuis et de chaque côté dudit troisième organe formant nervure, un premier jeu de portions de l'organe formant nervure connectant ledit premier organe formant nervure (64) à un côté dudit troisième organe formant nervure (70) et un second jeu de portions dudit organe formant nervure connectant ledit second organe formant nervure (66) de l'autre côté dudit troisième organe formant nervure (70).

10. Bandage selon la revendication 8 ou 9, dans lequel lesdites portions de l'organe formant nervure desdits premier et second jeux (28, 30) sont chacune de longueur substantiellement égale, chacune correspondant sensiblement à une moitié de la longueur axiale des organes cylindriques interne et externe, et dans lequel chaque portion de l'organe formant nervure de chacun des jeux forme un angle avec son plan radial d'intersection respectif, tous ces angles étant égaux et étant dirigés de façon similaire.

11. Bandage selon la revendication 8 ou 9, dans lequel lesdites portions de l'organe formant nervure desdits premier et second jeux (28, 30) sont chacune de longueur axiale substantiellement égale, chacune correspondant à sensiblement une moitié de la longueur axiale des organes cylindriques interne et externe, et dans lequel chaque portion de l'organe formant nervure de chacun des jeux forme un angle avec son plan radial d'intersection respectif, tous ses angles étant égaux, mais les angles des portions de l'organe formant nervure du premier jeu sont directement opposés aux angles des portions de l'organe formant nervure du second jeu.

12. Bandage selon l'une quelconque des revendications 1 à 4, dans lequel lesdits organes formant nervures (84, 90 ou 92, 94 ou 100, 102) ont la forme d'un tronc de cône droit circulaire ayant pour axe principal l'axe de rotation du bandage, dans lequel lesdits organes formant nervures (28, 30) s'étendent radialement depuis et de chaque côté des organes formant nervures, et dans lequel ledit organe formant nervures est connecté sur chacune de ses faces latérales aux portions respectives de chacun desdits organes formant nervures.

13. Bandage selon la revendication 12 et comprenant de plus un second organe formant nervure (86, 88 ou 96, 98) ayant la forme d'un cône droit circulaire avec son axe principal confondu avec l'axe de rotation du bandage, ledit second organe formant nervure ayant ses périphéries interne et externe connectées respectivement aux organes cylindriques interne et externe (22, 18) et connectées à chacune de leurs faces latérales aux portions respectives de chacun desdits organes formant nervures (28, 30), les sommets desdits cônes étant directement opposés.

14. Bandage selon la revendication 13 dans lequel lesdits organes formant nervures (84, 90 et 86, 88) se croisent les uns les autres (figure 17).

15. Bandage selon la revendication 13 dans lequel lesdits organes formant nervures (92, 94 et 96, 98) sont substantiellement bout à bout l'un par rapport à l'autre (18).

16. Bandage selon l'une quelconque des revendications 1 à 4, dans lequel ledit organe formant nervure (104) forme une partie d'hélice autour de l'axe de rotation du bandage, et comprend en outre une pluralité d'organes formant nervures additionnels, (104a, etc.) qui forment chacun une partie d'hélice autour de l'axe de rotation du bandage, lesdits organes formant nervure (26) s'étendant axialement depuis et de chaque côté desdits organes formant nervure, chacun desdits organes formant nervures étant connecté sur chacune de ses faces latérales a une partie respective d'au moins l'un desdits organes formant nervures, et chacun de ladite pluralité d'organes formant nervures ayant ses périphéries interne et externe connectées respectivement auxdits organes cylindriques interne et externe (22, 18).

17. Bandage selon la revendication 16, dans lequel les projections des hélices des organes formant nervures adjacents ne présentent pas d'intersection (figure 21).

18. Bandage selon la revendication 16, dans lequel les projections des hélices des organes formant nervure adjacents présentent des intersections les unes avec les autres (figure 22).

19. Bandage selon l'une quelconque des revendications 16 à 18 dans lequel chacun desdits organes formant nervures où chaque portion de ceux-ci est inclinée d'un angle entre 20° et 45° par rapport à son plan radial d'intersection respectif.

20. Bandage selon l'une quelconque des revendications précédentes dans lequel le matériau élastomère comprend un matériau choisi parmi le groupe des matériaux comprenant polyuréthanes, caoutchouc naturel, polybutadiènes, polyisoprènes, propylène-éthylène non conjugués, terpolymères diène, copolymères de butadiène avec acrylonitriles et avec méthacrylonitriles, styrènes et acrylates, et est de préférence un polyuréthane.

## Ansprüche

1. Reifen, der einen ringförmigen Körper aus elastischem, elastomeren Material umfaßt, wobei der Körper ein allgemein zylindrisches Außenteil (18) an seinem Außenumfang, ein allgemein zylindrisches, radial einwärts zu diesem Außenteil beabstandetes sowie koaxiales Innenteil (22), eine Mehrzahl von axial verlaufenden, in Umfangsrichtung beabstandeten Rippenelementen (26), die an ihren zugehörigen radial inneren sowie äußeren Enden mit den genannten inneren sowie äußeren zylindrischen Teilen verbunden sind, und wenigstens ein Stegteil (32) mit entgegengesetzten Seitenflächen aufweist, das erwähnte Stegteil an seinen radial inneren sowie äußeren Rändern jeweils mit den genannten inneren sowie äußeren zylindrischen Teilen verbunden ist und an wenigstens einer seiner Seitenflächen an wenigstens eines der besagten Rippenelemente angeschlossen ist, um dadurch mit diesem Rippenelement eine lasttragende und dämpfende Struktur für das genannte äußere zylindrische Teil zu bilden, dadurch gekennzeichnet, daß die besagten Rippenelemente (26) allgemein unter einem Winkel von etwa 15° bis 75° zu radialen Ebenen geneigt sind, die diese an ihren radial inneren Enden schneiden, daß die Rippenelemente mit Hinterschneidungen (34) an der Verbindungsstelle der Rippenelemente (26) mit den äußeren sowie inneren zylindrischen Teilen (18 und 22) ausgestaltet sind und daß das erwähnte elastomere Material einen Shore-Härtewert von 80A bis 50D und einen Kompressionsmodul bei einem Formfaktor von 0,5 sowie einer Kompression von 10 % von $6,9 \times 10^3$ bis $344 \times 10^3$ kPa, vorzugsweise von $20,7 \times 10^3$ bis $62,1 \times 10^3$ kPa, hat.

2. Reifen nach Anspruch 1, wobei an jeder Verbindungsstelle, an welcher der Winkel zwischen dem Rippenelement und dem jeweiligen zylindrischen Teil ein spitzer Winkel ist, die Hinterschneidung ein Kreisbogen mit einem Radius von 0,32 bis 1,27 cm ist.

3. Reifen nach Anspruch 1, wobei an jeder Verbindungsstelle, an der der Winkel zwischen dem Rippenelement und dem jeweiligen zylindrischen Teil ein stumpfer Winkel ist, die Hinterschneidung ein Kreisbogen mit einem Radius von 0,64 bis 2,54 cm ist.

4. Reifen nach irgendeinem der vorhergehenden Ansprüche, in welchem die Beziehung zwischen dem äußeren Radius des Außenteils (18) und dem radialen Abstand (D) von der radial äußeren Fläche des Innenteils (22) zur radial inneren Fläche des Außenteils (18) durch die Formel $r_o/10 \leq D \leq r_o/2$ bestimmt ist.

5. Reifen nach irgendeinem der vorhergehenden Ansprüche, wobei das erwähnte Stegteil (32) eben, senkrecht zur Drehachse des Reifens sowie etwa an der Hälfte zwischen den axialen Enden der genannten zylindrischen Teile (18, 22) angeordnet ist und wobei jedes der besagten Rippenelemente (26) sich axial zum erwähnten Stegteil erstreckt sowie ein auf jeder Seite des erwähnten Stegteils liegendes und mit der jeweiligen Seitenfläche verbundenes Stück besitzt.

6. Reifen nach Anspruch 5, wobei die Rippenelementstücke (28) an der einen Seite des erwähnten Stegteils jeweils denselben Winkel mit ihren jeweiligen radialen Schnittebenen bilden, wie ihn die Rippenelementstücke (30) an der anderen Seite des erwähnten Stegteils jeweils mit ihren jeweiligen radialen Schnittebenen bilden.

7. Reifen nach Anspruch 5, wobei die Rippenelementstücke (28) an der einen Seite des erwähnten Stegteils jeweils einen Winkel mit ihren jeweiligen radialen Schnittebenen bilden, der gleich dem Winkel ist, jedoch zu diesem entgegengesetzt gerichtet ist, den die Rippenelementstücke (30) an der anderen Seite des erwähnten Stegteils jeweils mit ihren jeweiligen radialen Schnittebenen bilden.

8. Reifen nach irgendeinem der Ansprüche 1 bis 4, der erste und zweite Stegteile (64, 66) umfaßt, die jeweils eben sind, senkrecht zur Drehachse des Reifens angeordnet sind und mit ihren inneren sowie äußeren Rändern jeweils mit den genannten inneren sowie äußeren zylindrischen Teilen (22a, 18a) verbunden sind, wobei das erwähnte erste Stegteil an dem einen axialen Ende der genannten inneren sowie äußeren zylindrischen Teile angeordnet und an einer seiner Seitenflächen mit den besagten Rippenelementstücken (28, 30) verbunden ist und das erwähnte zweite Stegteil an dem anderen axialen Ende der genannten inneren sowie äußeren zylindrischne Teile angeordnet und an einer seiner Seitenflächen mit den besagten Rippenelementstücken (28, 30) verbunden ist.

9. Reifen nach Anspruch 8, der ferner ein drittes, ebenes Stegteil (70) enthält, das senkrecht zur Drehachse des Reifens angeordnet ist sowie entgegengesetzte Seitenflächen hat, wobei dieses dritte Stegteil an seinen inneren sowie äußeren Rändern jeweils mit den genannten inneren sowie äußeren zylindrischen Teilen (22b, 18b) verbunden ist, das besagte dritte Stegteil etwa auf der Hälfte zwischen den axialen Enden der genannten zylindrischen Teile angeordnet ist, die besagten Rippenelemente (28, 30) sich an und zu jeder Seite des besagten dritten Stegteils erstrecken, ein erster Satz von Rippenelementstücken das besagte erste Stegteil (64) mit der einen Seite des besagten dritten Stegteils (70) und ein zweiter Satz von Rippenelementstücken das besagte zweite Stegteil (66) mit der anderen Seite des besagten dritten Stegteils (70) verbindet.

10. Reifen nach Anspruch 8 oder Anspruch 9, wobei die erwähnten Rippenelementstücke des genannten ersten sowie zweiten Satzes (28, 30) jeweils von im wesentlichen gleicher axialer Länge sind, jedes etwa einer Hälfte der axialen Länge der inneren sowie äußeren zylindrischen Teile entspricht und wobei jedes Rippenelementstück eines jeden Satzes mit seiner radialen Schnittebene einen Winkel bildet und alle diese Winkel gleich sowie gleichartig gerichtet sind.

11. Reifen nach Anspruch 8 oder 9, wobei die erwähnten Rippenelementstücke des genannten ersten und zweiten Satzes (28, 30) jeweils von im wesentlichen gleicher axialer Länge sind, jedes etwa einer Hälfte der axialen Länge der inneren sowie äußeren zylindrischen Teile entspricht und wobei jedes Rippenelementstück eines jeden Satzes mit seiner radialen Schnittebene einen Winkel bildet und alle diese Winkel gleich sind, jedoch die Winkel der Rippenelementstücke im ersten Satz entgegengesetzt zu den Winkeln der Rippenelementstücke im zweiten Satz gerichtet sind.

12. Reifen nach irgendeinem der Ansprüche 1 bis 4, wobei das erwähnte Stegteil (84, 90 oder 92, 94 oder 100, 102) die Gestalt eines Stumpfes eines korrekt kreisförmigen Kegels, dessen Hauptachse die Drehachse des Reifens ist, aufweist, wobei die genannten Rippenelemente (28, 30) sich radial an sowie zu jeder Seite des erwähnten Stegteils erstrecken und wobei das erwähnte Stegteil an jeder seiner Seitenflächen mit zugeordneten Stücken eines jeden der genannten Rippenelemente verbunden ist.

13. Reifen nach Anspruch 12, der ferner ein zweites Stegteil (86, 88 oder 96, 98) in der Gestalt eines korrekt kreisförmigen Kegels, dessen Hauptachse die Drehachse des Reifens ist, enthält, wobei das erwähnte zweite Stegteil an seinen inneren sowie äußeren Rändern jeweils mit den genannten inneren sowie äußeren zylindrischen Teilen (22, 18) verbunden ist und an jeder seiner Seitenflächen an jeweilige Stücke eines jeden der besagten Rippenelemente (28, 30) angeschlossen ist, wobei die Scheitelpunkte der erwähnten Kegel entgegengesetzt gerichtet sind.

14. Reifen nach Anspruch 13, wobei die erwähnten Stegteile (84, 90 und 86, 88) einander schneiden (Figur 17).

15. Reifen nach Anspruch 13, wobei die erwähnten Stegteile (92, 94 und 96, 98) miteinander in im wesentlichen anstoßender Lagebeziehung sind (Figur 18).

16. Reifen nach irgendeinem der Ansprüche 1 bis 4, wobei das erwähnte Stegteil (104) um die Drehachse des Reifens herum eine Teil-Schraubenlinie bildet und ferner eine Mehrzahl von zusätzlichen Stegteilen (104a usw.) enthält, deren jedes eine Teil-Schraubenlinie um die Drehachse des Reifens herum bildet, jedes der genannten Rippenelemente (26) sich axial sowie zu jeder Seite der erwähnten Stegteile erstreckt, jedes der erwähnten Stegteile an jeder seiner Seitenflächen mit einem zugehörigen Stück von wenigstens einem der genannten Rippenelemente verbunden ist und jedes aus der besagten Mehrzahl von Stegteilen an seinen inneren sowie äußeren Rändern an jeweils die genannten inneren sowie äußeren zylindrischen Teile (22, 18) angeschlossen ist.

17. Reifen nach Anspruch 16, wobei die Vorsprünge der Schraubenlinien von benachbarten Stegteilen einander nicht schneiden (Figur 21).

18. Reifen nach Anspruch 16, wobei die Vorsprünge der Schraubenlinien von benachbarten Stegteilen einander schneiden (Figur 22).

19. Reifen nach irgendeinem der Ansprüche 16 bis 18, wobei jedes genannte Rippenelement oder Stück von diesem unter einem Winkel von 20° bis 45° zu seinen zugehörigen radialen Schnittebenen geneigt ist.

20. Reifen nach irgendeinem der vorhergehenden Ansprüche, wobei das erwähnte elastomere Material ein aus der Polyurethane; Naturkautschuk; Polybutadiene; Polyisoprene; unkonjugierte Äthylen-Propylen-Dienterpolymere; Kopolymere von Butadien mit Akrylnitrilen und mit Methakrylnitrilen; Styrolen und Akrylaten umfassenden Materialgruppe ausgewähltes Material und vorzugsweise ein Polyurethan ist.

Fig. 1.

Fig.2.

Fig.3.

Fig.4.

Fig.5.

# Fig. 6.

# Fig. 7.

Fig.8.

Fig.9.

Fig.10.

Fig.11.

# Fig.12.

# Fig.13.

Fig.14.

Fig.15.

Fig.16.

Fig.17.

Fig.18.

Fig.19.

Fig.20.

Fig.21.

Fig.22.